(19) Europäisches Patentamt
European Patent Office
Office européen des brevets

(11) **EP 3 475 596 B1**

(12) **EUROPEAN PATENT SPECIFICATION**

(45) Date of publication and mention
of the grant of the patent:
**03.11.2021 Bulletin 2021/44**

(21) Application number: **17733441.4**

(22) Date of filing: **26.06.2017**

(51) Int Cl.:
***F16H 3/42*** *(2006.01)*

(86) International application number:
**PCT/EP2017/065736**

(87) International publication number:
**WO 2017/220818 (28.12.2017 Gazette 2017/52)**

(54) **GEAR TRANSMISSION FOR SWITCHING BETWEEN GEARS WITHOUT INTERRUPTING A TORQUE**

GETRIEBE ZUM UMSCHALTEN ZWISCHEN ZAHNRÄDERN OHNE UNTERBRECHUNG EINES DREHMOMENTS

TRANSMISSION PAR ENGRENAGES POUR UNE COMMUTATION ENTRE DES ENGRENAGES SANS INTERRUPTION D'UN COUPLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2016 LU 93119**

(43) Date of publication of application:
**01.05.2019 Bulletin 2019/18**

(73) Proprietor: **Helmut-Schmidt-Universität/ Universität der Bundeswehr Hamburg 22043 Hamburg (DE)**

(72) Inventors:
• **HORN, Joachim**
**22143 Hamburg (DE)**
• **VON DER WENSE, Jens**
**25337 Kölln-Reisiek (DE)**
• **MÜLLER, Jens**
**22589 Hamburg (DE)**

(74) Representative: **RGTH**
**Patentanwälte PartGmbB**
**Neuer Wall 10**
**20354 Hamburg (DE)**

(56) References cited:
• **"DAS NEUNGANG-AUTOMATIKGETRIEBE 9G-TRONIC VON MERCEDES-BENZ", , 31 January 2014 (2014-01-31), XP055175590, Retrieved from the Internet: URL:http://download.springer.com/static/pd f/181/art%3A10.1007%2Fs35148-014-0012-3.pd f?auth66=1426248756_78b6cdb924a4a3cedf89e 9 1536aaa6ee&ext=.pdf [retrieved on 2015-03-11]**
• **WOLFGANG SCHREIBER ET AL: "Das neue Doppelkupplungsgetriebe von Volkswagen", AUTOMOBILTECHNISCHE ZEITUNG ATZ 11/2003, no. 11/2003, 30 November 2003 (2003-11-30) , pages 1022-1039, XP055346339,**

EP 3 475 596 B1

**Description**

The present invention relates to a gear transmission unit for switching between gears without interrupting a torque, the gear transmission unit comprising a drive arrangement with a drive shaft and a drive gear arranged on the drive shaft, the gear transmission unit further comprising a driven arrangement with a driven shaft and a driven gear arranged on the driven shaft. The driven gear comprises a first section with a first wheel diameter and a second section with a second wheel diameter, wherein the first wheel diameter is greater than the second wheel diameter. The drive gear comprises radially protruding drive teeth engaging with channels formed between neighboring driven teeth of the driven gear.

**Prior art**

Gear transmissions are known in the prior art for use in vehicles, tool machines and other devices. Gear transmissions allow shifting by changing translation ratios between gears, which result in a changing of the speed and/or of the torque. In gear transmissions a drive shaft and a driven shaft are often arranged parallel to one another.
Commonly, drive gears and driven gears are wheels with radially protruding teeth.
US 2015/020 4420 A1 addresses the problem, that stopping of a transmission for switching the speed of a driven arrangement is disadvantageous since the driven, inert masses coupled to the driven arrangement must be braked and accelerated again after the switching process. US 2015/020 4420 A1 therefor suggests a gear transmission unit, wherein a first gear is shaped like a truncated cone.
US 3,608,390 relates to a variable speed ratio drive system comprising a composite toothed member of substantially conical form, said composite member consisting of a plurality of adjacent coaxial toothed gears of varying diameter mounted on a first shaft and adapted to rotate with each other and with the shaft.
The prior art document "DAS NEUNGANG-AUTOMATIKGETRIEBE 9G-TRONIC VON MERCEDES-BENZ" dated January 31, 2014 describes a mechanism for switching gears without torque interruption.
The prior art document "Das neue Doppelkupplungsgetriebe von Volkswagen" by Wolfgang Schreiber et al (Automobiltechnische Zeitung; ATZ 11/2003, 3, Summary no. 11/2003, November 30, 2003) discloses a gear transmission for switching between gears without torque interruption.

**Description of the invention: object, solution, advantages**

The object of the present invention is to provide an improved gear transmission unit for switching between gears without interruption of a torque while a load stays coupled at the driven arrangement during the switching process.
This object is solved by a gear transmission as defined in claim 1. The dependent claims concern particular embodiments of the invention as defined in claim 1.
The inventive gear transmission unit is particularly designed for vehicles including unmanned aircrafts or unmanned aircraft systems as well as for sports cars. The inventive gear transmission allows the switching between gears without interrupting a torque while the load can stay connected during the switching process. The inventive gear transmission can further be built very small and light to be used in vehicles and in particular also in unmanned aircraft systems.
The invention relates to the switching mechanism for switching between two neighboring gears. However, the inventive gear transmission unit can comprise multiple and in particular more than two gears. The driven gear of the inventive gear transmission can therefore preferably comprise multiple sections - one section for each gear.
According to the present invention, without interrupting the torque means switching with continued torque. Therefore, the present invention does not relate to a torque-free switching. The present invention allows the switching between gears with continued torque while the load stays coupled to the driven arrangement, in particular to the driven shaft of it. The present invention relates to a switching during rotation of the drive gear and the driven gear. More particularly, the present invention relates to a torque- afflicted switching during rotation of the drive gear and the driven gear.
The drive gear and the driven gear can be both wheels with multiple teeth protruding radially. The drive gear can be understood as a power wheel. The driven gear can be one single wheel with multiple sections. However, the driven gear can also consist of multiple wheels connected or assembled together, each wheel comprising one section.
The first and second sections are each forming to a different gear stage. The channels between neighboring teeth of the driven gear can be understood as grooves along the surface of the driven gear. During operation, the drive gear is rotating and engaging with its radially protruding teeth into channels of the driven gear, thereby driving the driven gear with a certain speed. This speed is dependent on the rotation speed of the drive gear, the diameters for the drive gear and the driven gear and/or the number of teeth of the drive gear and the driven gear.
During switching operation, the drive gear is shifted axially along the surface of the driven gear and approximately along the axis of the driven shaft. The drive tooth currently engaged with a channel during the shifting operation as shifted along and within this channel, while both wheels (the drive gear and the driven gear) are continuously turning / rotating. While the drive tooth is shifted along a channel, it follows a non-linear shape or path of the channel. The non-linear shape of the channel or path allows a profile function with module equality constraint.

Preferably the channels between neighboring driven teeth comprise a curved form or shape. This means, that during switching, the drive tooth currently engaged with a channel does not follow a straight and linear path from the first section to the second section, but rather follows a curved path on the surface of the driven gear from one section to the second section. Particularly preferable, each channel extending from the first to the second section comprises a curved form or shape.

The driven gear comprises a first number of channels at the first section and a second number of channels at the second section, wherein the first number of channels is preferably higher than the second number of channels. Therefore, the second section comprises at a minimum one channel less than the first section. This means, that preferably not all channels from the first section extend to the second section. More preferably, the second number of channels equals to the first number of channels minus 1.

Preferably each of the second number of channels is non-linearly extending through an intermediate section between the first section and the second section into one of the channels of the first number of channels thereby forming a single channel. This means that an intermediate section is arranged between the first section and the second section. The channels almost - depending on the gear ratio - fully extending from the first section to the second section are therefore extending through the intermediate section.

The first section comprises preferably at a minimum one channel depending on the gear ratio, which is not passing into a channel of the second section. Therefore, preferably exactly one channel at a minimum configuration of the first section is not passing through the intermediate section. Furthermore, the second section comprises preferably at a minimum one channel depending on the gear ratio not passing into a channel of the second section and therefore preferably not passing through the intermediate section.

The intermediate section between the first section and the second section comprises preferably one single area of discontinuity. At this one single area of discontinuity, no channel is arranged within or at the intermediate section. This means, that at this area of discontinuity no channel is extending from the first section to the second section.

During operation, the angular position of the driven gear is continuously determined to ensure that the switching between gears does not occur at the single area of discontinuity at the intermediate section. A switching process between one gear and the neighboring gear therefore does not last longer that one cycle rotation of the driven gear. Therefore, the gear transmission preferably comprises means for continuously determining the angular position of the driven gear.

The drive teeth preferably comprise a spherical or a semi-spherical shape. The drive teeth can also comprise a shape between a spherical and a semi-spherical form. However, the drive teeth and the channels of the driven gear do not comprise an evolvent profile or shape. The channel between neighboring teeth of the driven gear can comprise a shape corresponding to a spherical or a semi-spherical shape of the drive teeth. For example, the channels can comprise a calotte or spherical shape. Therefore, each channel preferably comprises a circular arc shaped profile or cross-section.

The wheel diameter of the driven gear preferably non-linearly decreases from the first wheel diameter to the second wheel diameter. Therefore, the channel also comprises a non-linear path in vertical direction, which means towards and away from the driven shaft or the axis of the driven gear. Furthermore, the channel comprises a non-linear path in horizontal direction. Horizontal direction means along the surface and approximately in axial direction. The profile of the body of the driven gear preferably comprises a curved and no conus shaped form. Both curves, $r(z)$ and $phi(z)$, are supposed to be continuously differentiable.

The drive gear is preferably arranged on the drive shaft by means of a ball bearing. This allows the drive gear to be movably arranged in vertical and horizontal directions on the drive shaft.

The gear transmission unit preferably comprises a first motor, which is operatively connected to the drive gear for horizontally moving the drive gear relative to the driven gear. This allows the movement of the drive gear along the surface and/or along the channels of the driven gear.

Furthermore, the gear transmission unit further preferably comprises a second motor, which is operatively connected to the drive gear for vertically moving the drive gear relative to the driven gear. This second motor allows the drive gear to be moved towards and away from the driven gear during switching operation. This further allows compensating the non-linearly decreasing diameter of the driven gear from the first section to the second section during switching operation. With the second motor the contact pressure between the two gears, the drive gear and the driven gear, can be controlled and a constant contact pressure between the two gears can be kept during horizontal movement of the drive gear relative to the driven gear e.g. by force control.

The movement speeds in vertical and horizontal directions are therefore controlled by the first motor and second motor. Preferably, the movement speeds in both directions (horizontal and vertical direction) are aligned to each other to allow a controlled movement of the drive gear in horizontal and vertical direction relative to the driven gear. The movement speed in both directions is also controlled based on the curve profiles of the non-linear curves of the channels in horizontal as well as in vertical direction.

## Brief description of the drawings

In the following, the present invention is being described based on preferred embodiments of the invention.

Figure 1:  shows a schematic overview of a gear transmission unit,

Figure 2:  a drive arrangement and a driven arrangement of the gear transmission unit,

Figure 3:  a schematic showing the non-linear curve of the channels and the non-linear decrease of the wheel diameter of the driven gear,

Figures 4a, b, c:  showing a top view, a perspective view and a side view of the basic body of the driven gear, and

Figures 5a, b, c, d:  showing perspective views of the channel curves without and with radius compensation.

## Preferred embodiments of the invention

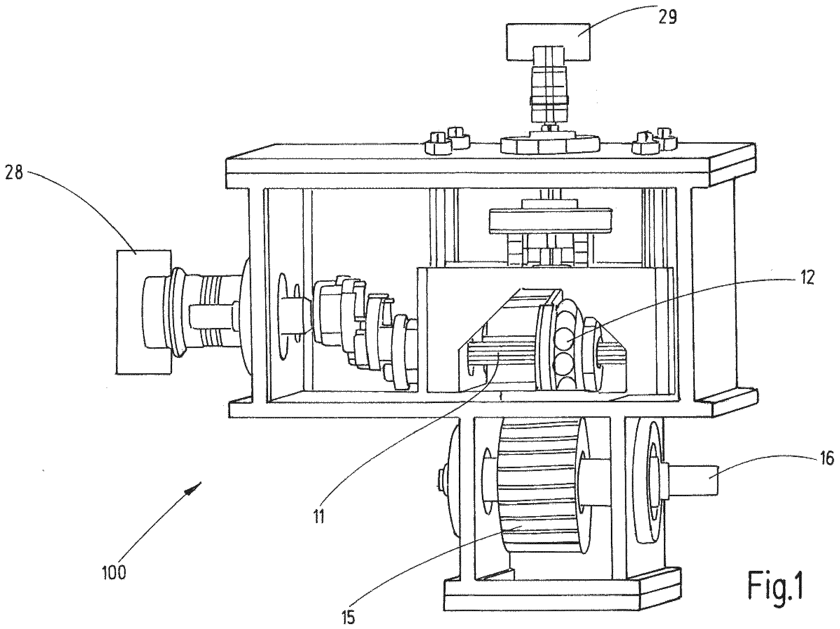

Figure 1 shows a schematic overview of a gear transmission 100. The gear transmission 100 comprises a drive arrangement 10 with a drive shaft 11 and a drive gear 12 arranged on the drive shaft 11 by means of a ball bearing 33. That driven arrangement 13 of the gear transmission 100 comprises a driven shaft 14 and a driven gear 15 arranged on the driven shaft 14. The drive shaft 11 and the driven shaft 14 are arranged parallel to each other.
The gear transmission 100 further comprises a first motor 28 and a second motor 29. With the first motor 28, the drive gear 12 can be moved in horizontal direction 31. This means, the drive gear 12 can be moved along the surface of the driven gear from a first section 16 to a second section 18 of the driven gear and vice versa.
With the second motor 29, the drive gear 12 can be moved relative to the driven gear 15 in vertical direction 32. This means, the drive gear 12 can be moved towards and away from the driven gear 15, controlling the contact pressure between the two gears, the drive gear 12 and the driven gear 15 e.g. by force control.
The drive gear 12 and the driven gear 15 are constantly pressed together during operation and during switching between gears. Therefore, the force between the two gears (drive gear 12 and driven gear 15) is transmitted through the Hertzian stress principal.

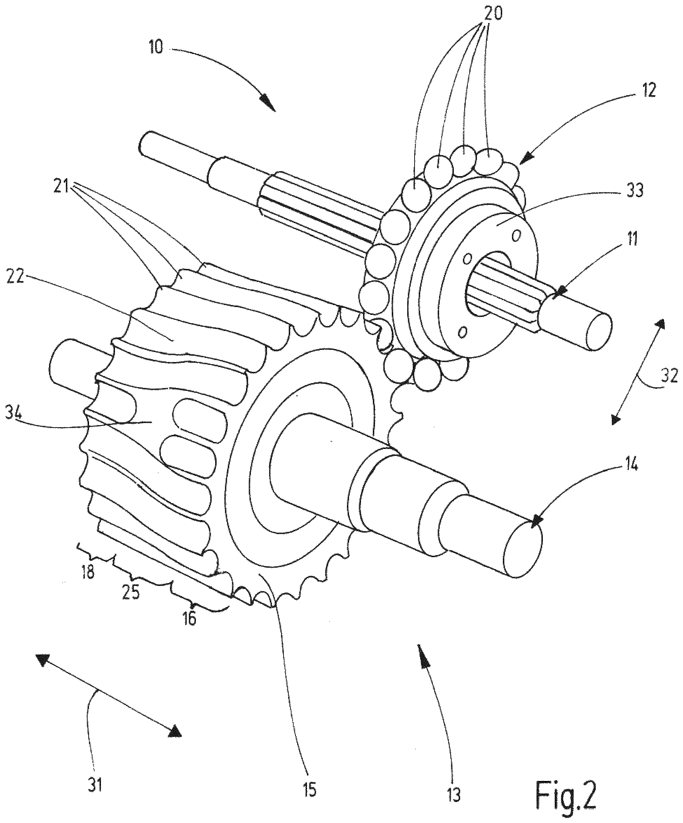

Figure 2 shows a principal overview of the drive arrangement 10 and the driven arrangement 13. The drive gear 12 arranged on the drive shaft 11 is horizontally and vertically movable relative to the driven gear 15. The drive gear 12 comprises multiple radially protruding drive teeth 20 with a spherical or a semi-spherical shape. The driven gear 15 comprises a first section 16 implementing a first gear and a second section 18 implementing the second gear. During switching from the first gear to the second gear, the drive gear 12 is moved in horizontal direction 31 along the surface of the driven gear 15 from the first section 16 to the second section 18.
The first section 16 comprises at a minimum one more channel 22 or one more driven tooth 21 -depending on the gear ratio- than the second section 18. Apart from one single channel 22 in the second section 18, almost all channels 22 in the second section 18 -except of those connected to the location of discontinuity- are extending to channels 22 of the first section 16, thereby forming single channels 22 extending from the first section 16 to the second section 18.
The driven gear 15 comprises further an intermediate section 25 arranged between the first section 16 and the second section 18. The channels 22 non-linearly extend along the outer surface of the driven gear 15 from the first section 16 to the second section 18 passing through the intermediate section 25. In particular in the area of the intermediate section 25, the channels 22 comprise a curved shape along the surface of the driven gear 15.
The intermediate section 25 comprises one single area of discontinuity 34. At this single area of discontinuity 34, one single channel 22 at the first section 16 is not passing through the intermediate section 25 to the second section 18. At this single area of discontinuity 34, no channel 22 passes through the intermediate section 25.
The area of discontinuity 34 might be designed differently- depending on the ratio and other factors. Fig. 2 just shows an example of a possible area of discontinuity 34.
The distance between two neighboring driven teeth 21 is constant in all areas. This means, the distance between to neighboring driven teeth 21 is constant along the entire width of the driven gear 15. Furthermore, the distance between to neighboring driven teeth 21 is constant over the entire circumference of the driven gear 15.

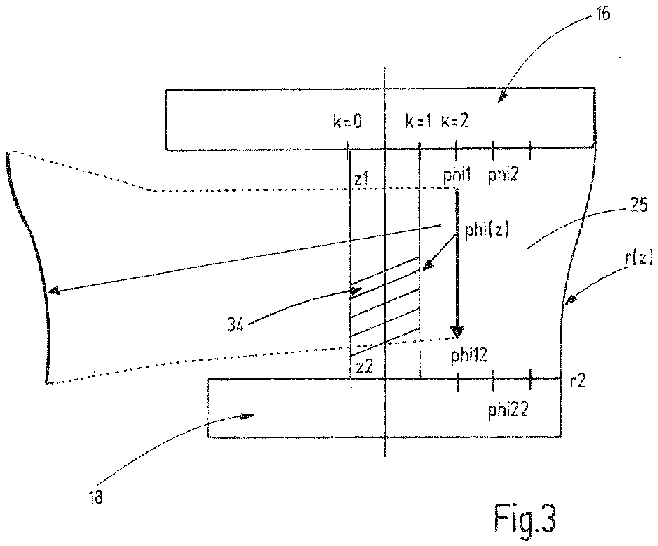

Figure 3 shows a principal schematic of the non-linear curve shaped channels 22 and the non-linear decrease of the wheel diameter. The mathematical function of the decreasing wheel diameter of the driven gear 15 is indicated as r(z). The mathematical function of the curved channels 22 is indicated as phi(z). Apart from the single area of discontinuity 34, the channels 22 pass through the intermediate section 25. The wheel diameter of the driven gear 15

4

is in particular continuously decreasing in the area of the intermediate section 25. In the area of the first section 16 and the second section 18, the wheel diameter is constant. Furthermore, the wheel diameter at the first section 16 is larger than the wheel diameter at the second section 18.

In the following, the functional relations between the different parameters are shown based on mathematical equations.

Functional relation between profile function (wheel diameter) and channel curve: Since r(z) and phi(z) has to be constant and able to be constantly differentiated, common trigonometric functions or parts of it e.g. sine or cosine for r(z) were used. Furthermore, the module constraint, which results into a constant distance between the channels in all points of the given trajectories, is necessary to guaranty an overall meshing at any time -except the area of discontinuity- between the drive gear and the driven gear.

$$r(z) \times phi(z) = k \times const \qquad (1)$$

$$phi(z) = k \times (const/r(z)) \qquad (2)$$

const = distance between two neighboring driven teeth (d)

$$phi(z) = (d/r(z)) \times k \qquad (3)$$

Examples:

phi(z1) = (d/r1) x k, as starting position
phi(z) = (d/r(z)) x k, as running position
phi(z2) = (d/r2) x k, as destination position

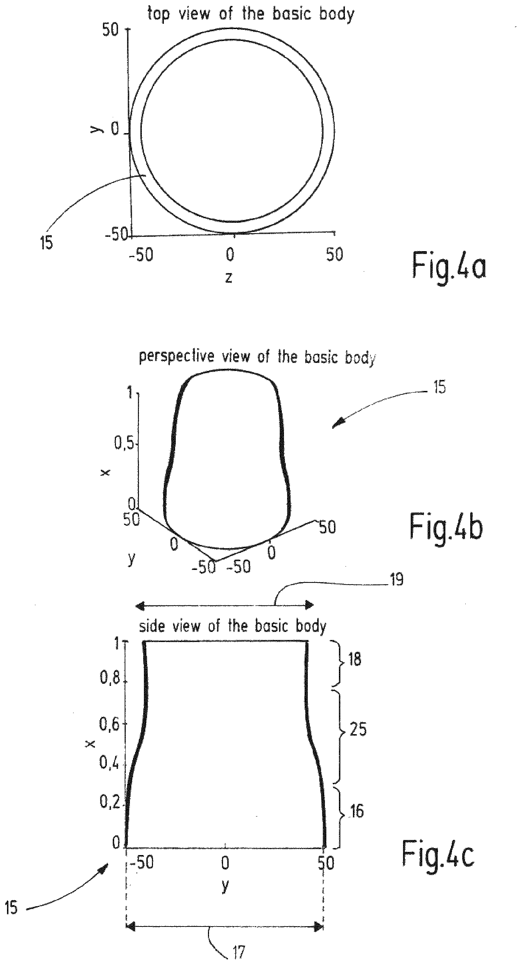

In figures 4a, b and c are shown the basic body of the driven gear 15 in top view (figure 4a), in a perspective view (figure 4b) and in a side view (figure 4c).

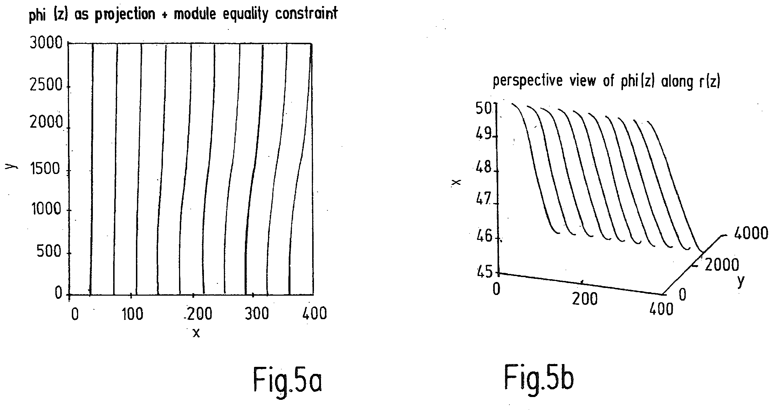

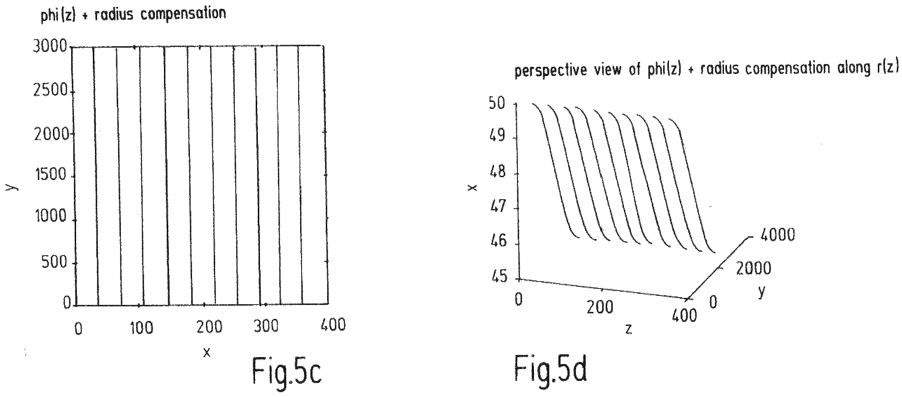

In figures 5a and b are shown the perspective views of the decreasing wheel diameter

-  phi(z). Figures 5a and b show the perspective view of the decreasing wheel diameter
-  phi(z) - based on a radius compensation. This proofs the module equality constraint of the curved channels and the decreasing diameter of the driven gear 15.

Reference signs

100    Gear transmission

10    Drive arrangement
11    Drive shaft
12    Drive gear
13    Driven arrangement
14    Driven shaft
15    Driven gear
16    First section
17    First wheel diameter
18    Second section
19    Second wheel diameter
20    Drive teeth
21    Driven teeth
22    Channel
23    First number of channels

24    Second number of channels
25    Intermediate section
26    First width
27    Second width
28    First motor
29    Second motor
30    Switching device
31    Horizontal direction
32    Vertical direction
33    Ball bearing
34    Area of discontinuity

**Claims**

1. Gear transmission (100) for switching between gears without interrupting a torque, the gear transmission (100) comprising a drive arrangement (10) with a drive shaft (11) and a drive gear (12) arranged on the drive shaft (11), the gear transmission (100) further comprising a driven arrangement (13) with a driven shaft (14) and a driven gear (15) arranged on the driven shaft (14), whereby the drive gear (12) can be moved towards and away from the driven gear (15) in a direction (32) perpendicular to the central axis of the driven gear (15), whereby the drive gear (12) and the driven gear (15) are constantly pressed together during operation and during switching such that the force between the drive gear (12) and driven gear (15) is transmitted through the Hertzian stress principal, whereby the driven gear (15) comprising a first section (16) with a first wheel diameter (17) and a second section (18) with a second wheel diameter (19), wherein the first wheel diameter (17) is greater than the second wheel diameter (19), wherein the drive gear (12) comprises radially protruding drive teeth (20) engaging with channels (22) formed between neighboring driven teeth (21) of the driven gear (15), whereby the channels (22) non-linearly extend along an outer surface of the driven gear (15) from the first section (16) to the second section (18).

2. Gear transmission (100) according to claim 1,
**characterized in that** the channels (22) comprise a curved form.

3. Gear transmission (100) according to claim 1 or 2,
**characterized in that** the driven gear (15) comprises a first number (23) of channels (22) at the first section (16) and a second number (24) of channels (22) at the second section (18), wherein the first number (23) of channels (22) is higher than the second number (24) of channels (22).

4. Gear transmission (100) according to claim 3,
**characterized in that** some or all channels (22) of the second number (24) of channels (22) extend non-linearly through an intermediate section (25) between the first section (16) and the second section (18) into one of the channels (22) of the first number (23) of channels (22) thereby forming a single channel (22).

5. Gear transmission (100) according to one of the preceding claims,
**characterized in that** the drive teeth (20) comprise a spherical or a semi-spherical shape or a shape between a spherical and a semi-spherical shape.

6. Gear transmission (100) according to one of the preceding claims,
**characterized in that** a wheel diameter of the driven gear (15) non-linearly decreases from the first wheel diameter (17) to the second wheel diameter (19).

7. Gear transmission (100) according to one of the preceding claims,
**characterized in that the** drive gear (12) and the driven gear (15) are pressed against each other.

8. Gear transmission (100) according to one of the preceding claims,
**characterized in that** the drive gear (12) comprises a first width (26), wherein the driven gear (15) comprises a second width (27), wherein the first width (26) is smaller than the second width (27).

9. Gear transmission (100) according to one of the preceding claims,
**characterized in that** the drive gear is arranged on the drive shaft by means of a ball bearing (33).

10. Gear transmission (100) according to one of the preceding claims, **characterized in that** the gear transmission (100) further comprises a first motor (28), which is operatively connected to the drive gear (12) for moving the drive gear (12) relative to the driven gear (15) in a direction (31) parallel to the central axis of the driven gear (15).

11. Gear transmission (100) according to one of the preceding claims, **characterized in that** the gear transmission (100) further comprises a second motor (29), which is operatively connected to the drive gear (12) for moving the drive gear (12) relative to the driven gear (15) in a direction (32) perpendicular to the central axis of the driven gear (15).

12. Gear transmission (100) according to one of the preceding claims, **characterized in that** the angular position of the driven gear (15) is continuously determined.

13. Gear transmission (100) according to one of the preceding claims, **characterized in that** the switching process between one gear and the neighboring gear is synchronized and depends on the angular position of the driven gear (15).


**Patentansprüche**

1. Zahnradgetriebe (100) zum Wechseln zwischen Gängen ohne Drehmomentunterbrechung, wobei das Zahnradgetriebe (100) eine Antriebsanordnung (10) mit einer Antriebswelle (11) und ein auf der Antriebswelle (11) angeordnetes Antriebsrad (12) umfasst, wobei das Zahnradgetriebe (100) ferner eine angetriebene Anordnung (13) mit einer angetriebenen Welle (14) und ein auf der angetriebenen Welle (14) angeordnetes angetriebenes Rad (15) umfasst, wobei das Antriebsrad (12) in einer Richtung (32) senkrecht zu der Mittelachse des angetriebenen Rads (15) zu dem angetriebenen Rad (15) hin und davon weg bewegt werden kann, wobei das Antriebsrad (12) und das angetriebene Rad (15) im Betrieb und beim Wechseln konstant zusammengedrückt werden, so dass die Kraft zwischen dem Antriebsrad (12) und den angetriebenen Rad (15) durch das Hertzsche Spannungsprinzip übertragen wird, wobei das angetriebene Rad (15) einen ersten Abschnitt (16) mit einem ersten Raddurchmesser (17) und einem zweiten Abschnitt (18) mit einem zweiten Raddurchmesser (19) umfasst, wobei der erste Raddurchmesser (17) größer ist als der zweite Raddurchmesser (19), wobei das Antriebsrad (12) radial vorstehende Antriebszähne (20) umfasst, die in Kanäle (22) eingreifen, die zwischen benachbarten angetriebenen Zähnen (21) des angetriebenen Rads (15) gebildet sind, wobei sich die Kanäle (22) nichtlinear entlang einer Außenfläche des angetriebenen Rads (15) vom ersten Abschnitt (16) zum zweiten Abschnitt (18) erstrecken.

2. Zahnradgetriebe (100) gemäß Anspruch 1, **dadurch gekennzeichnet, dass** die Kanäle (22) eine gekrümmte Form umfassen.

3. Zahnradgetriebe (100) gemäß Anspruch 1 oder 2, **dadurch gekennzeichnet, dass** das angetriebene Rad (15) eine erste Anzahl (23) von Kanälen (22) am ersten Abschnitt (16) und eine zweite Anzahl (24) von Kanälen (22) am zweiten Abschnitt (18) umfasst, wobei die die erste Anzahl (23) von Kanälen (22) höher als die zweite Anzahl (24) von Kanälen (22) ist.

4. Zahnradgetriebe (100) gemäß Anspruch 3, **dadurch gekennzeichnet, dass** sich einige oder alle Kanäle (22) der zweiten Anzahl (24) von Kanälen (22) nichtlinear durch einen Zwischenabschnitt (25) zwischen dem ersten Abschnitt (16) und dem zweiten Abschnitt (18) in einen der Kanäle (22) der ersten Anzahl (23) von Kanälen (22) erstrecken, und dabei einen einzigen Kanal (22) bilden.

5. Zahnradgetriebe (100) gemäß einem der vorhergehenden Ansprüche, **dadurch gekennzeichnet, dass** die Antriebszähne (20) eine kugelförmige oder eine halbkugelförmige Form oder eine Form zwischen einer kugelförmigen und einer halbkugelförmigen Form umfassen.

6. Zahnradgetriebe (100) gemäß einem der vorhergehenden Ansprüche, **dadurch gekennzeichnet, dass** ein Raddurchmesser des angetriebenen Rads (15) vom ersten Raddurchmesser (17) zum zweiten Raddurchmesser (19) nichtlinear abnimmt.

7. Zahnradgetriebe (100) gemäß einem der vorhergehenden Ansprüche, **dadurch gekennzeichnet, dass** das Antriebsrad (12) und das angetriebene Rad (15) gegeneinandergedrückt werden.

**8.** Zahnradgetriebe (100) gemäß einem der vorhergehenden Ansprüche, **dadurch gekennzeichnet, dass** das Antriebsrad (12) eine erste Breite (26) umfasst, wobei das angetriebene Rad (15) eine zweite Breite (27) umfasst, wobei die erste Breite (26) kleiner als die zweite Breite (27) ist.

**9.** Zahnradgetriebe (100) gemäß einem der vorhergehenden Ansprüche, **dadurch gekennzeichnet, dass** das Antriebsrad mittels eines Kugellagers (33) auf der Antriebswelle angeordnet ist.

**10.** Zahnradgetriebe (100) gemäß einem der vorhergehenden Ansprüche, **dadurch gekennzeichnet, dass** das Zahnradgetriebe (100) ferner einen ersten Motor (28) umfasst, der betriebsmäßig mit dem Antriebsrad (12) verbunden ist, um das Antriebsrad (12) relativ zum angetriebenen Rad (15) in einer Richtung (31) parallel zu der Mittelachse des angetriebenen Rads (15) zu bewegen.

**11.** Zahnradgetriebe (100) gemäß einem der vorhergehenden Ansprüche, **dadurch gekennzeichnet, dass** das Zahnradgetriebe (100) ferner einen zweiten Motor (29) umfasst, der betriebsmäßig mit dem Antriebsrad (12) verbunden ist, um das Antriebsrad (12) relativ zum angetriebenen Rad (15) in einer Richtung (32) senkrecht zu der Mittelachse des angetriebenen Rads (15) zu bewegen.

**12.** Zahnradgetriebe (100) gemäß einem der vorhergehenden Ansprüche, **dadurch gekennzeichnet, dass** die Winkelstellung des angetriebenen Rads (15) kontinuierlich ermittelt wird.

**13.** Zahnradgetriebe (100) gemäß einem der vorhergehenden Ansprüche, **dadurch gekennzeichnet, dass** der Schaltvorgang zwischen einem Gang und dem Nachbargang synchronisiert ist und von der Winkelstellung des angetriebenen Rads (15) abhängt.


**Revendications**

**1.** Transmission à engrenages (100) pour passer d'un engrenage à un autre sans interrompre un couple, la transmission à engrenages (100) comprenant un agencement d'entraînement (10) avec un arbre d'entraînement (11) et un engrenage d'entraînement (12) disposé sur l'arbre d'entraînement (11), la transmission à engrenages (100) comprenant en outre un agencement mené (13) avec un arbre mené (14) et un pignon mené (15) disposé sur l'arbre mené (14), moyennant quoi l'engrenage d'entraînement (12) peut être déplacé vers et à l'écart du pignon mené (15) dans une direction (32) perpendiculaire à l'axe central du pignon mené (15), moyennant quoi l'engrenage d'entraînement(12) et le pignon mené (15) sont constamment pressés l'un contre l'autre pendant le fonctionnement et pendant la commutation de telle sorte que la force entre l'engrenage d'entraînement (12) et le pignon mené (15) soit transmise par l'intermédiaire du principe de contrainte hertzien, moyennant quoi le pignon mené (15) comprend une première section (16) avec un premier diamètre de roue (17) et une deuxième section (18) avec un deuxième diamètre de roue (19), dans lequel le premier diamètre de roue (17) est supérieur au deuxième diamètre de roue (19), dans lequel l'engrenage d'entraînement (12) comprend des dents d'entraînement en saillie radiale (20) s'engageant avec des canaux (22) formés entre les dents menées voisines (21) du pignon mené (15), moyennant quoi les canaux (22) s'étendent de manière non linéaire le long d'une surface extérieure de l'engrenage mené (15) de la première section (16) à la deuxième section (18).

**2.** Transmission à engrenages (100) selon la revendication 1, **caractérisée en ce que** les canaux (22) comportent une forme courbe.

**3.** Transmission à engrenages (100) selon la revendication 1 ou 2, **caractérisée en ce que** le pignon mené (15) comprend un premier nombre (23) de canaux (22) au niveau de la première section (16) et un deuxième nombre (24) de canaux (22) au niveau de la deuxième section (18), dans lequel le premier nombre (23) de canaux (22) est supérieur au deuxième nombre (24) de canaux (22).

**4.** Transmission à engrenages (100) selon la revendication 3, **caractérisée en ce que** certains ou tous les canaux (22) du deuxième nombre (24) de canaux (22) s'étendent de manière non linéaire à travers une section intermédiaire (25) entre la première section (16) et la deuxième section (18) dans un des canaux (22) du premier nombre (23) de canaux (22) formant ainsi un seul canal (22).

**5.** Transmission à engrenages (100) selon une des revendications précédentes, **caractérisée en ce que** les dents d'entraînement (20) comportent une forme sphérique ou semi-sphérique ou une forme comprise entre une forme sphérique et une forme semi-sphérique.

**6.** Transmission à engrenages (100) selon une des revendications précédentes, **caractérisée en ce qu'**un diamètre de roue du pignon mené (15) diminue de manière non linéaire du premier diamètre de roue (17) au deuxième diamètre de roue (19).

**7.** Transmission à engrenages (100) selon une des revendications précédentes, **caractérisée en ce que** l'engrenage d'entraînement (12) et le pignon mené (15) sont pressés l'un contre l'autre.

**8.** Transmission à engrenages (100) selon une des revendications précédentes, **caractérisée en ce que** l'engrenage d'entraînement (12) comprend une première largeur (26), dans laquelle le pignon mené (15) comprend une deuxième largeur (27), dans laquelle la première largeur (26) est inférieure à la deuxième largeur (27).

**9.** Transmission à engrenages (100) selon une des revendications précédentes, **caractérisée en ce que** le pignon d'entraînement est disposé sur l'arbre d'entraînement au moyen d'un roulement à billes (33).

**10.** Transmission à engrenages (100) selon une des revendications précédentes, **caractérisée en ce que** la transmission à engrenages (100) comprend en outre un premier moteur (28), qui est fonctionnellement raccordé à l'engrenage d'entraînement (12) pour déplacer l'engrenage d'entraînement (12) par rapport au pignon mené (15) dans une direction (31) parallèle à l'axe central du pignon mené (15).

**11.** Transmission à engrenages (100) selon une des revendications précédentes, **caractérisée en ce que** la transmission à engrenages (100) comprend en outre un deuxième moteur (29), qui est fonctionnellement raccordé à l'engrenage d'entraînement (12) pour déplacer l'engrenage d'entraînement (12) par rapport au pignon mené (15) dans une direction (32) perpendiculaire à l'axe central du pignon mené (15).

**12.** Transmission à engrenages (100) selon une des revendications précédentes, **caractérisée en ce que** la position angulaire du pignon mené (15) est déterminée en continu.

**13.** Transmission à engrenages (100) selon une des revendications précédentes, **caractérisée en ce que** le processus de commutation entre un engrenage et l'engrenage voisin est synchronisé et dépend de la position angulaire du pignon mené (15).

EP 3 475 596 B1

Fig.1

Fig.2

Fig.3

top view of the basic body

Fig.4a

perspective view of the basic body

Fig.4b

side view of the basic body

Fig.4c

phi (z) as projection + module equality constraint

Fig.5a

perspective view of phi(z) along r(z)

Fig.5b

perspective view of phi(z) + radius compensation along r(z)

Fig.5d

phi(z) + radius compensation

Fig.5c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150204420 A1

- US 3608390 A

**Non-patent literature cited in the description**

- *DAS NEUNGANG-AUTOMATIKGETRIEBE 9G-TRONIC VON MERCEDES-BENZ,* 31 January 2014

- **WOLFGANG SCHREIBER et al.** Das neue Doppelkupplungsgetriebe von Volkswagen. *Automobiltechnische Zeitung; ATZ,* 30 November 2003, vol. 3